# EUROPEAN PATENT APPLICATION

(11) **EP 4 286 433 A1**
(43) Date of publication of application: **06.12.2023**
(21) Application number: 21921980.5
(22) Date of filing: 08.02.2021
(51) Int. Cl.: C08F 293/00, H01M 4/62, H01M 10/0525

(54) **BLOCK POLYMER AND PREPARATION METHOD THEREFOR AND APPLICATION THEREOF, AND LITHIATED BLOCK POLYMER AND PREPARATION METHOD THEREFOR AND APPLICATION THEREOF**

(30) Priority: 28.01.2021 CN 202110117682
(71) Applicant: Envision Dynamics Technology (Jiangsu) Co., Ltd., Jiangyin City 214443 (CN); Envision Intelligent Innovation Dynamics Technology (Shanghai) Ltd., Shanghai 201315 (CN)
(72) Inventor: WEI, Difeng, Shanghai 201315 (CN); LI, Hao, Shanghai 201315 (CN); LI, Ruonan, Shanghai 201315 (CN); SUN, Huayu, Shanghai 201315 (CN)
(74) Representative: Becker Kurig & Partner Patentanwälte mbB
(86) International application number: PCT/CN2021/076031
(87) International publication number: WO 2022/160381

(57) **Abstract**

A block polymer and a preparation method therefor and an application thereof, and a lithiated block polymer and a preparation method therefor and an application thereof. The block polymer has the structure shown in B-C-B-A, wherein A represents a polymer block A, B represents a polymer block B, and C represent a polymer block C; the polymer block A is formed by polymerization of an alkenyl formic acid monomer; the polymer block B is formed by polymerization of an aryl vinyl monomer; and the polymer block C is formed by polymerization of an acrylate monomer. The lithiated block polymer is a lithiated product of the block polymer. The block polymer and the lithiated block polymer may be used as a lithium-ion battery binder.

## Description

### CROSS-REFERENCE TO RELATED APPLICATION

This application claims the priority benefit of China application serial no. 202110117682.4, filed on January 28, 2021. The entirety of the above-mentioned patent application is hereby incorporated by reference herein and made a part of this specification.

### BACKGROUND

### Technical Field

The embodiments of the disclosure relate to the field of lithium-ion batteries, and in particular, relates to a block polymer, a lithiated block polymer, and a preparation method and application thereof.

### Description of Related Art

The negative electrode binder is one of the important auxiliary functional materials in lithium-ion batteries and is the main source of the internal dynamic mechanical properties of the electrode. The main function of the negative electrode binder is to bind one active material to another active material and to bind the current collector to the active material. A conventional negative electrode binder mainly contains materials such as styrene-butadiene rubber, acrylic polymer, or acrylic polymer. These materials exhibit strong cohesive force and provide good electrochemical stability, but these materials are not conductive. As a result, these materials are likely to cause an increase in the internal resistance of the negative electrode, thereby deteriorating the fast charging performance of the lithium-ion battery.

In order to solve the above problems, the following two methods are mainly adopted in the related art. The first method is to improve the affinity between the active material and the binder. For instance: the patent literature with the granted patent number JP5373388B2 records a method for mechanochemical treatment of graphite particles. In this method, the surface of the graphite particles is rendered hydrophilic. Further, the particle sizes of graphite particles are uniform, the average particle size is reduced, the wettability of the surface is improved, and the affinity for the water-based binder is increased, which is beneficial to the improvement of the charging efficiency of a lithium-ion battery. However, in this method, special graphite particle processing equipment is required, which is costly, and the same effect cannot be achieved for battery systems with negative active materials other than graphite (e.g., silicon).

The second method is to use a binder with better ion-conducting properties to replace the conventional binder. For instance, the patent literature with the granted patent number CN105489898B describes a conductive water-based binder that can improve the overall conductivity of the battery. The conductive water-based binder includes graphene, carbon nanotubes, a cross-linked polymer, and a multivalent metal ion water-soluble salt solution. Herein, the graphene and the carbon nanotubes are individually bonded with the cross-linked polymer through chemical bonds to form a three-dimensional conductive network structure. The cross-linked polymer is cross-linked with a multivalent metal ion water-soluble salt solution to form a three-dimensional bonded network structure. However, since the conductive water-based binder is mainly a combination of various existing materials, its composition is complicated. The costs of raw materials used to prepare the conductive water-based binder is relatively high, so it is difficult for the conductive water-based binder to be popularized on a large scale. Moreover, there is a problem of incompatibility when the conductive water-based binder is applied to a negative electrode of a silicon system.

Furthermore, it is found in the research that there are few recordation in the related of improving the negative electrode binder and improving the fast charging performance of lithium-ion batteries from the perspective of molecular structure design.

### SUMMARY

The disclosure provides a block polymer, a lithiated block polymer, and a preparation method and application thereof.

To solve the above technical problems, the first aspect of the disclosure provides a block polymer having a structure shown in B-C-B-A, wherein A represents a polymer block A, B represents a polymer block B, and C represents a polymer block C.

The polymer block A is polymerized from alkenyl formic acid monomers.

The polymer block B is polymerized from aryl vinyl monomers.

The polymer block C is polymerized from acrylate monomers.

In some preferred embodiments, a degree of the polymerization of the polymer block A is 10 to 50, a degree of the polymerization of the polymer block B is 200 to 500, and a degree of the polymerization of the polymer block C is 400 to 1000.

In some preferred embodiments, a structure of each alkenyl formic acid monomer is 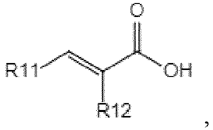 where R¹¹ and R¹² are independently hydrogen or C₁₋₄ alkyl, and the C₁₋₄ alkyl is selected from methyl, ethyl, n-propyl, isopropyl, n-butyl, isobutyl, or tert-butyl. Preferably, the alkenyl formic acid is acrylic acid.

In some preferred embodiments, a structure of each aryl vinyl monomer is 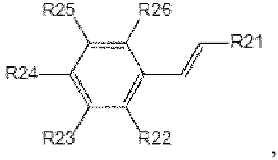 where R²¹, R²², R²³, R²⁴, R²⁵, and R²⁶ are independently hydrogen or C₁₋₄ alkyl, and the C₁₋₄ alkyl is selected from methyl, ethyl, n-propyl, isopropyl, n-butyl, isobutyl, or tert-butyl. Preferably, R²¹, R²², R²³, R²⁴, R²⁵, and R²⁶ are hydrogen or methyl. More preferably, the aryl vinyl monomer is styrene.

In some preferred embodiments, a structure of each acrylate monomer is 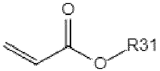 , where R³¹ is a linear or branched C₁₋₁₀ alkyl group. More preferably, R³¹ is a linear or branched C₄₋₈ alkyl group. More preferably, R³¹ is

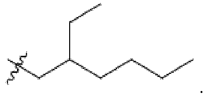

In the disclosure, the block polymer is prepared by a conventional step-by-step feeding polymerization method used in the art. In the step-by-step feeding polymerization method, according to the specific block structure of the block polymer, each polymer block A, polymer block B, or polymer block C is added step by step to achieve the step-by-step polymerization of each polymer block.

The second aspect of the disclosure further provides a preparation method of the block polymer, and the preparation method includes the following steps. A polymer block C-B-A and the polymer block B are polymerized to obtain the block polymer, where A represents the polymer block A, B represents the polymer block B, and C represents the polymer block C.

In some preferred embodiments, the polymer block C-B-A is prepared through the following method, and the method includes the following steps. A polymer block B-A and the polymer block C are polymerized to obtain the polymer block C-B-A. In the polymer block C-B-A, A represents the polymer block A, B represents the polymer block B, and C represents the polymer block C.

In some preferred embodiments, a polymer block B-A is prepared through the following method, and the method includes the following steps. The polymer block B and the polymer block A are polymerized to obtain the polymer block B-A. In the polymer block B-A, A represents the polymer block A, and B represents the polymer block B.

In some preferred embodiments, the polymerization reaction is carried out in the presence of a RAFT reagent and an initiator.

To be specific, the preparation method of the block polymer includes the following steps. (1) The polymer block A and the polymer block B are polymerized in the presence of the RAFT reagent and the initiator to obtain the polymer block B-A. (2) The polymer block C and the polymer block B-A are polymerized in the presence of the RAFT reagent and the initiator to obtain the polymer block C-B-A. (3) The polymer block B and the polymer block C-B-A are polymerized in the presence of the RAFT reagent and the initiator to obtain the block polymer.

The third aspect of the disclosure further provides a lithiated block polymer, and the lithiated block polymer is a lithiated product of the aforementioned block polymer.

In some preferred embodiments, the lithiated block polymer has a structure represented by general formula (I), 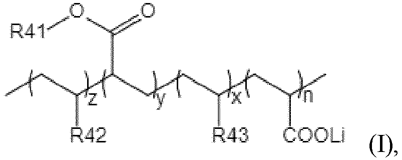
where n is 10 to 50, x is 200 to 500, y is 400 to 1000, and z is 200-500,
R⁴¹ is C₄₋₈ alkyl; preferably, R⁴¹ is 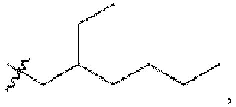
R⁴² and R⁴³ are phenyl or C₁₋₄ alkyl substituted phenyl, and the C₁₋₄ alkyl substituted phenyl is selected from methyl, ethyl, n-propyl, isopropyl, n-butyl, isobutyl, or tert-butyl substituted phenyl groups. Preferably, R⁴² and R⁴³ are phenyl.

In some preferred embodiments, the lithiated block polymer is 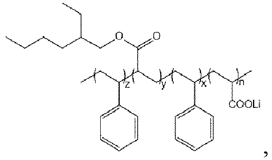 where n is 10 to 50, x is 200 to 500, y is 400 to 1000, and z is 200-500.

The fourth aspect of the disclosure further provides a preparation method of a lithiated block polymer, and the preparation method includes the following steps.

In step (1), polyacrylic acid-polystyrene-poly(2-ethylhexyl acrylate) (PAA-PSt-PEHA) and styrene monomers are polymerized, and polyacrylic acid-polystyrene-poly(2-ethylhexyl acrylate)-polystyrene (PAA-PSt-PEHA-PSt) is obtained.

In step (2), the polyacrylic acid-polystyrene-poly(2-ethylhexyl acrylate)-polystyrene (PAA-PSt-PEHA-PSt) is treated with lithium hydroxide, and the lithiated block polymer is obtained. 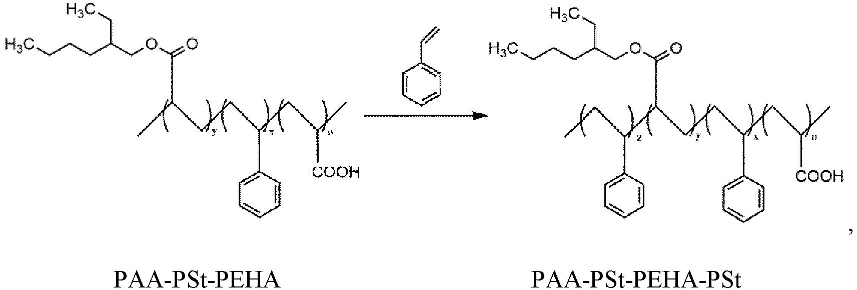 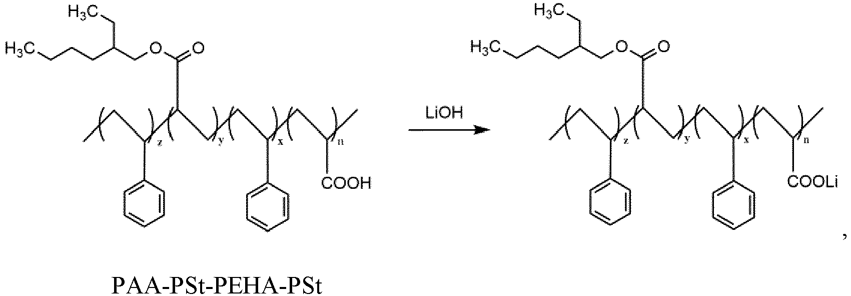 where in both step (1) and step (2), n is 10 to 50, x is 200 to 500, and y is 400 to 1000, and in step (2), z is 200 to 500.

In step (1), a mass ratio of the polyacrylic acid-polystyrene-poly(2-ethylhexyl acrylate)-polystyrene (PAA-PSt-PEHA-PSt) to the styrene monomers preferably is (0.01 to 0.3): 1 and more preferably (0.02 to 0.27): 1.

In step (I), the polymerization reaction is carried out in the presence of an initiator, and the initiator preferably is potassium persulfate, sodium persulfate, or ammonium persulfate.

In step (1), the temperature of the polymerization reaction is 50°C to 90°C, and more preferably 60°C to 80°C.

In step (1), the time of the polymerization reaction preferably is 2 hours to 8 hours.

In step (1), after the polymerization reaction, a polymerization reaction product polyacrylic acid-polystyrene-poly(2-ethylhexyl acrylate)-polystyrene (PAA-PSt-PEHA-PSt) is washed with deionized water until pH of the polymerization reaction product is 3 to 6.

In step (2), the lithium hydroxide preferably is an aqueous solution of lithium hydroxide, and a mass fraction of the lithium hydroxide in the lithium hydroxide aqueous solution preferably is 5% to 15%.

In step (1), a preparation method of the polyacrylic acid-polystyrene-poly(2-ethylhexyl acrylate) (PAA-PSt-PEHA) includes the following steps.

In step (A), polyacrylic acid-polystyrene (PAA-PSt) and 2-ethylhexyl acrylate monomers are polymerized, and the polyacrylic acid-polystyrene-poly(2-ethylhexyl acrylate) (PAA-PSt-PEHA) is obtained. 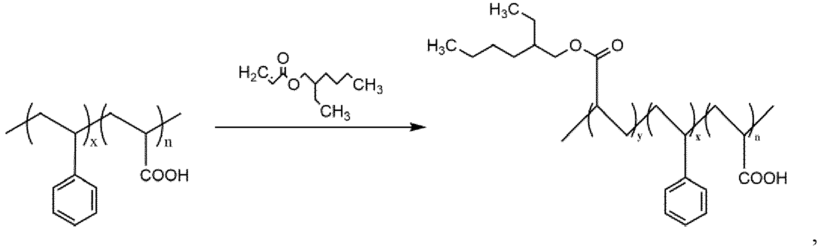 where in step (A), n is 10 to 50, x is 200 to 500, and y is 400 to 1000.

In step (A), a mass ratio of the polyacrylic acid-polystyrene (PAA-PSt) to the 2-ethylhexyl acrylate preferably is (0.6 to 0.9): 1, and more preferably (0.6 to 0.7): 1.

In step (A), the polymerization reaction is carried out in the presence of an initiator, and the initiator is potassium persulfate, sodium persulfate, or ammonium persulfate, such as potassium persulfate.

In step (A), the temperature of the polymerization reaction preferably is 50°C to 90°C, and more preferably 60°C to 80°C.

In step (A), the time of the polymerization reaction preferably is 2 hours to 8 hours, and more preferably 2 hours to 6 hours.

In step (A), preparation of the polyacrylic acid-polystyrene (PAA-PSt) includes the following steps.

In step (I), polyacrylic acid and styrene monomers are polymerized, and the polyacrylic acid-polystyrene (PAA-PSt) is obtained. 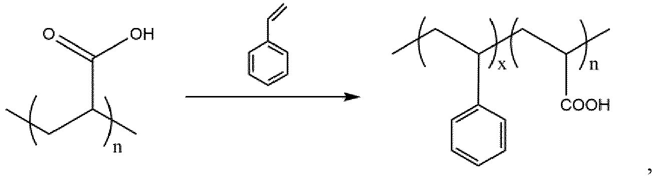 where n is 10 to 50 and x is 200 to 500.

In step (I), a mass ratio of the polyacrylic acid and the styrene monomers preferably is 1: (3 to 90), and more preferably 1: (5 to 75).

In step (I), the polymerization reaction is carried out in the presence of an initiator, and the initiator preferably is potassium persulfate, sodium persulfate, or ammonium persulfate.

In step (I), the temperature of the polymerization reaction preferably is 50°C to 90°C, and more preferably 60°C to 80°C.

In step (I), the time of the polymerization reaction preferably is 2 hours to 10 hours, and more preferably 2 hours to 8 hours.

In step (I), the preparation method of the polyacrylic acid is not limited, but the following is preferred. The preparation method of the polyacrylic acid is that in the presence of a RAFT reagent and an initiator, acrylic acid monomers are polymerized to obtain the polyacrylic acid. In the polymerization reaction, a mass ratio of the RAFT reagent, the initiator, and the acrylic acid monomer is (0.5-1.0): (0.2-0.5): (10-20). The temperature of the polymerization reaction preferably is 50°C to 90°C, and more preferably 60°C to 80°C. The time of the polymerization reaction preferably is 10 hours to 22 hours, and more preferably 12 hours to 20 hours. The initiator preferably is potassium persulfate, sodium persulfate, or ammonium persulfate. The RAFT agent preferably is 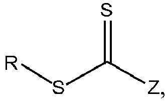 where R is an isopropionic group, acetoxy group, 2-cyanoacetoxy, or 2-aminoacetoxy, and Z is C₄₋₁₂ alkyl, C₄₋₁₂ alkylthio, phenyl, or benzyl, such as 2-mercapto-S-thiobenzoylacetic acid.

The fourth aspect of the disclosure further provides an application of a lithiated block polymer as a binder for a lithium ion battery.

On the basis of not violating common knowledge in the art, the abovementioned preferred conditions can be combined arbitrarily to obtain the preferred embodiments of the disclosure.

The reagents and raw materials used in the disclosure are all commercially available.

The lithiated block polymer provided by the disclosure at least exhibits the following advantages compared to the related art.
(1) In the disclosure, from the perspective of molecular structure design, a lithiated block polymer having an improved ion-conducting performance is provided, so the internal impedance of the electrode is thus reduced.
(2) The lithiated block polymer provided by the disclosure requires low costs, is compatible with various negative electrode systems, and is easy to be popularized on a large scale.
(3) Using the lithiated block polymer provided by the disclosure as a binder, the binding property is improved, so the peeling strength of the negative electrode of the lithium-ion battery including the prepared binder is high.
(4) Using the lithiated block polymer provided by the disclosure as a binder, the lithium-ion battery including the prepared binder has improved fast charging performance, improved low-temperature discharge performance, and less gas generation at high temperature.

### DESCRIPTION OF THE EMBODIMENTS

To better illustrate the goal, technical solutions, and advantages of the embodiments of the disclosure, specific examples are included to provide a detailed description of each of the embodiments of the disclosure. It should be understood that, however, it can be understood by a person having ordinary skill in the art that, in the various embodiments of the disclosure, numerous technical details are provided in order to provide the reader with a better understanding of the disclosure. However, even without these technical details and various changes and modifications based on the following embodiments, the technical solutions claimed in the disclosure can still be achieved. The experimental methods for which specific conditions are not indicated in the following embodiments are usually in accordance with conventional conditions or in accordance with the conditions suggested by the manufacturers. Percentages and parts, unless otherwise indicated, are by weight.

### Example 1: Preparation of Lithiated Polyacrylic Acid-PolyStyrene-Poly(2-ethylhexyl acrylate)-PolyStyrene (PAA-PSt-PEHA-PSt)

### Step one: preparation of polyacrylic acid (PAA)

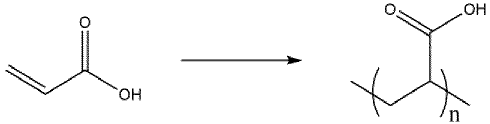

1.0g of 2-mercapto-S-thiobenzoylacetic acid (molecular weight: 212.3g/mol), 3.0g to 17.0g of refined acrylic acid monomers were weighed and mixed, and poured into a 500mL three-necked flask. Next, 0.2g to 0.5g of potassium persulfate was weighed and dissolved in 5g to 10g of deionized water, stored at low temperature for later use, placed in a water bath, added with magnets, and stirred and dissolved at room temperature. Nitrogen gas was then passed for 30 minutes to remove the oxygen in it, the temperature was raised to 60°C to 80°C, and the aforementioned aqueous solution of potassium persulfate was added to react for 12 to 20 hours, and the polyacrylic acid (PAA) is prepared.

### Step two: preparation of polyacrylic acid-polystyrene (PAA-PSt)

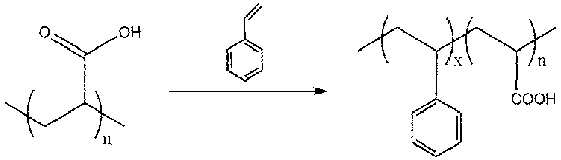

98.0g to 245.0g of styrene monomers were weighed, slowly added into the flask after the reaction in step one through a syringe, the reaction was continued at 60°C to 80°C for 2 to 8 hours, and the polyacrylic acid-polystyrene was obtained.

### Step three: preparation of polyacrylic acid-polystyrene-poly(2-ethylhexyl acrylate) (PAA-PSt-PEHA)

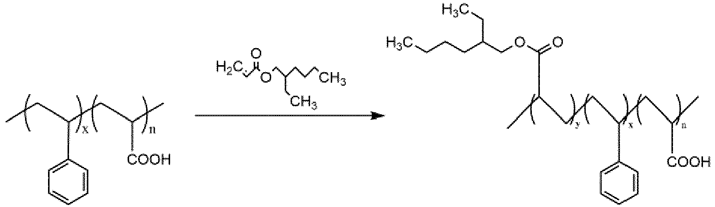

347.0g to 866.0g of isooctyl acrylate monomers were weighed, slowly added into the flask after the reaction in step two through a syringe, the reaction was continued at 60°C to 80°C for 2 to 6 hours, and the polyacrylic acid-polystyrene-polystyrene-poly(2-ethylhexyl acrylate) (PAA-PSt-PEHA) was then obtained.

### Step four: preparation of polyacrylic acid-polystyrene-polystyrene-poly(2-ethylhexyl acrylate)-polystyrene (PAA-PSt-PEHA-PSt)

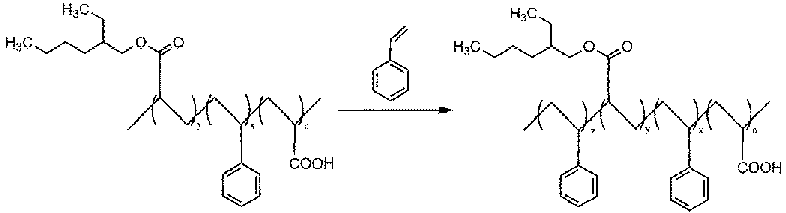

98.0g to 245.0g of styrene monomers were weighed and slowly added into the flask after the reaction in step three through a syringe, the reaction was continued at 60°C to 80°C for 2 to 8 hours, the reacted product was washed with deionized water until the pH was 3-6, and the polyacrylic acid-polystyrene-polystyrene-poly(2-ethylhexyl acrylate)-polystyrene (PAA-PSt-PEHA-PSt) was obtained.

### Step five: preparation of lithiated polyacrylic acid-polystyrene-poly(2-ethylhexyl acrylate)-polystyrene (PAA-PSt-PEHA-PSt)

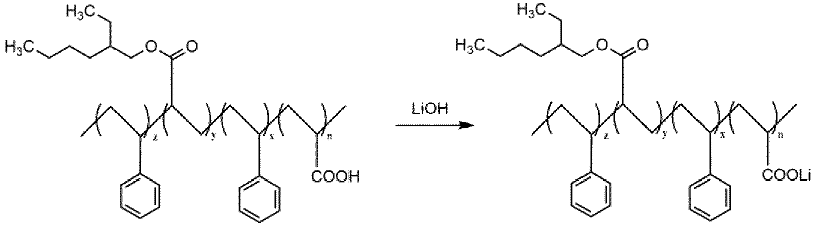

500g of the polyacrylic acid-polystyrene-poly(2-ethylhexyl acrylate)-polystyrene (PAA-PSt-PEHA-PSt) obtained in step 4 and 15g to 25g of lithium hydroxide solution with a mass fraction of 5% to 15% (containing 0.75-3.75g of lithium hydroxide) were weighed and stirred at a speed of 300rpm/h for 60 minutes, and the lithiated polyacrylic acid-polystyrene-poly(2-ethylhexyl acrylate)-polystyrene (PAA-PSt-PEHA-PSt) was then obtained.

### Example 2: Preparation of Lithium-ion Battery

A 1Ah pouch battery was prepared using the lithiated polyacrylic acid-polystyrene-poly(2-ethylhexyl acrylate)-polystyrene (PAA-PSt-PEHA-PSt) prepared in Example 1 as a battery binder.

### Preparation of Positive Electrode Sheet

A positive electrode active material NCM811, conductive carbon black Super-P, and binder polyvinylidene fluoride (PVDF) were mixed in a mass ratio of 96:2:2 and dispersed in N-methyl-2-pyrrolidone (NMP), and a positive electrode slurry was obtained. The slurry was evenly coated on both sides of an aluminum foil, dried, rolled, and vacuum dried at 80°, an aluminum-made lead-out wire was welded with an ultrasonic welder, and a positive electrode plate was then obtained. A thickness of the electrode plate was 120µm to 150µm.

### Preparation of Negative Electrode Sheet

A composite negative electrode active material (98% artificial graphite + 2% silicon oxide negative electrode), conductive carbon black Super-P, lithiated polyacrylic acid-polystyrene-poly(2-ethylhexyl acrylate)-polystyrene (PAA-PSt-PEHA-PSt) prepared in step one, and thickener sodium carboxymethyl cellulose were mixed in a mass ratio of 95:2:2:1 and dispersed in deionized water, and a negative electrode slurry was obtained. The slurry was coated on both sides of a copper foil, dried, rolled, and vacuum dried, a nickel-made lead-out wire was welded with an ultrasonic welder, and a negative electrode plate was then obtained. A thickness of the electrode plate was 80µm to 100µm.

### Preparation of Cell

A separator with a thickness of 20 µm was placed between the positive electrode plate and the negative electrode plate. The sandwich structure composed of the positive electrode plate, the negative electrode plate, and the separator was wound, and then the wound body is flattened and put into an aluminum foil packaging bag and vacuum baked at 85°C for 48 hours, and a cell to be filled was obtained.

### Injection and Formation of Cell

The electrolyte was injected into the cell in a glove box, sealed in vacuum, and left to stand for 24 hours. The regular formation of the first charge was performed according to the following steps: 0.02C constant current charged to 3.05V, 0.05C constant current charged to 3.75V, 0.2C constant current charged to 4.05V, and vacuum sealing was performed. It was then further charged to 4.2V with a constant current of 0.33C, and after being left at room temperature for 24 hours, it was discharged to 3.0V with a constant current of 0.2C.

In Example 3, a lithium-ion battery was prepared according to the same method as in Example 2, except that in the preparation of the negative electrode sheet, the negative electrode active material used was artificial graphite.

### Comparative Example 1: Preparation of Lithium-ion Battery Using Traditional SBR Binder

### Preparation of Positive Electrode Sheet

A positive electrode active material NCM811, conductive carbon black Super-P, and binder polyvinylidene fluoride (PVDF) were mixed in a mass ratio of 96:2:2 and dispersed in N-methyl-2-pyrrolidone (NMP), and a positive electrode slurry was obtained. The slurry was evenly coated on both sides of an aluminum foil, dried, rolled, and vacuum dried at 80°, an aluminum-made lead-out wire was welded with an ultrasonic welder, and a positive electrode plate was then obtained. A thickness of the electrode plate was 120µm to 150µm.

### Preparation of Negative Electrode Sheet

A composite negative electrode active material (98% artificial graphite + 2% silicon oxide negative electrode), conductive carbon black Super-P, SBR, and thickener sodium carboxymethyl cellulose were mixed in a mass ratio of 95:2:2:1 and dispersed in deionized water, and a negative electrode slurry was obtained. The slurry was coated on both sides of a copper foil, dried, rolled, and vacuum dried, a nickel-made lead-out wire was welded with an ultrasonic welder, and a negative electrode plate was then obtained. A thickness of the electrode plate was 80µm to 100µm.

### Preparation of Cell

A separator with a thickness of 20 µm was placed between the positive electrode plate and the negative electrode plate. The sandwich structure composed of the positive electrode plate, the negative electrode plate, and the separator was wound, and then the wound body is flattened and put into an aluminum foil packaging bag and vacuum baked at 85°C for 48 hours, and a cell to be filled was obtained.

### Injection and Formation of Cell

The electrolyte was injected into the cell in a glove box, sealed in vacuum, and left to stand for 24 hours. The regular formation of the first charge was performed according to the following steps: 0.02C constant current charged to 3.05V, 0.05C constant current charged to 3.75V, 0.2C constant current charged to 4.05V, and vacuum sealing was performed. It was then further charged to 4.2V with a constant current of 0.33C, and after being left at room temperature for 24 hours, it was discharged to 3.0V with a constant current of 0.2C.

In Comparative Example 2, a lithium-ion battery was prepared according to the same method as in Comparative Example 1, except that in the preparation of the negative electrode sheet, the negative electrode active material used was artificial graphite.

### Test Example 1: Characterization of Polyacrylic Acid-PolyStyrene-Poly(2-ethylhexyl acrylate)-PolyStyrene (PAA-PSt-PEHA-PSt)

0.01g of polyacrylic acid-polystyrene-poly(2-ethylhexyl acrylate)-polystyrene was weighed and dissolved in 5ml of a tetrahydrofuran solvent, and its molecular weight and molecular weight distribution curve were determined by gel permeation chromatography. The results are shown in Table 1.

**[Table 1]**

| Polymer Type | Design Molecular Weight (Mn) | Conversion Rate | Measured Molecular Weight (Mn) | Molecular Weight Distribution (PDI) |
|---|---|---|---|---|
| | [g mol⁻¹] | % | [g mol⁻¹] | Mw/Mn |
| PAA | 2500 | 98.7 | 2673 | 1.07 |
| PAA-PSt | 2.5K-45K | 99.2 | 46.3K | 1.09 |
| PAA-PSt-PEHA | 2.5K-45K-120K | 98.8 | 166.2K | 1.18 |
| PAA-PSt-PEHA-PSt | 2.5K-45K-120K-45K | 99.2 | 208.8K | 1.23 |

### Test Example 2: Lithium-ion Battery Performance Test

### (1) Test of Performance of Fast Charging

At 25°C, a constant current charge test was carried out on the batteries prepared in Examples and Comparative Examples at a rate of 2C, and the rate charge capacity retention was calculated. The rate charge retention of the battery at a rate of 2C = the capacity released after the battery was charged at a rate of 2C/the capacity released after the battery was charged at a rate of 1/3C. The results are shown in Table 2.

**[Table 2]**

| Rate Charge Capacity vs.0.33C@25°C | |
|---|---|
| Rate | 2C |
| Example 2 | 82.4% |
| Example 3 | 80.2% |
| Comparative Example 1 | 77.5% |
| Comparative Example 2 | 71.9% |

### (2) Test of Peeling Strength

The negative electrode sheets produced in Examples and Comparative Examples were cut into strips with a width of 2 cm×10 cm. Rectangular stainless steel plates of the same size were pasted with 3M VHB double-sided tape of the same size (the plates were wiped clean with alcohol before pasting) and rolled back and forth three times with a roller of a specific weight, so that the tape and the steel plates were closely attached. The electrode sheets (active material side) were then precisely attached to the other side of the tape, rolled three times by the roller as well, and finally placed in a universal material testing machine to test the peeling strength.

One section of each steel plate is placed in the clamp under the machine. The steel plate was clamped vertically to the ground, gently torn from the bottom to the middle of the electrode piece, and then bent 180° to the clamp above the machine for clamping. The machine was controlled to adjust the position of the upper clamp, the test software was activated, the test condition was set to a tensile rate of 50 mm/min, all initial parameters were reset to zero, and the test was started. The results are shown in Table 3.

**[Table 3]**

| 180° Peeling Strength Test/N m⁻¹ | |
|---|---|
| Example 2 | 18 |
| Example 3 | 15 |
| Comparative Example 1 | 13 |
| Comparative Example 2 | 10 |

### (3) Test of Gas Production Performance at High Temperature

The batteries prepared in Examples and Comparative Examples were weighed for initial weight and initial volume (measured by drainage method), placed in an environment of 60°C, and then taken out every 7 days. The temperature was lowered to normal temperature to measure the volume, and the volume growth rate was calculated. After each measurement, the batteries were put back into the temperature of 60°C and charged at a current of 0.03C until the end of 28 days. The results are shown in Table 4.

**[Table 4]**

| Gas Production Volume Growth Rate at High Temperature/% | | | | |
|---|---|---|---|---|
| Test Days | 7 Days | 14 Days | 21 Days | 28 Days |
| Example 2 | 2.45% | 3.99% | 4.55% | 4.85% |
| Example 3 | 2.49% | 4.88% | 6.86% | 8.95% |
| Comparative Example 1 | 3.85% | 4.96% | 6.73% | 8.99% |
| Comparative Example 2 | 4.84% | 6.94% | 7.85% | 9.74% |

### (4) Test of Discharge Performance at Low Temperature

The batteries prepared in Examples and Comparative Examples were used to measure their discharge capacity retention at -20°C: at 25°C, the fully charged battery was discharged at 1C to 3.0V after capacity division, and the initial discharge capacity was recorded as DC (25°C). Next, at 25°C, the batteries were charged to 4.2V with a constant current and constant voltage at 1C, and the cut-off current was 0.05C. Next, the batteries were cooled to -20°C for 4 hours and then discharged to 3.0V at 1C, and the discharge capacity DC (-20°C) was recorded. Discharge capacity retention at -20°C = 100%*DC (-20°C)/DC (25°C). The results are shown in Table 5.

**[Table 5]**

| Low temperature (-20°C) capacity retention @0.33C | |
|---|---|
| Example 2 | 75.3% |
| Example 3 | 72.5% |
| Comparative Example 1 | 69.2% |
| Comparative Example 2 | 65.7% |

It will be apparent to those skilled in the art that various modifications and variations can be made to the disclosed embodiments without departing from the scope or spirit of the disclosure. In view of the foregoing, it is intended that the disclosure covers modifications and variations provided that they fall within the scope of the following claims and their equivalents.

## Claims

1. A block polymer, **characterized in that**, wherein the block polymer has a structure shown in B-C-B-A, wherein A represents a polymer block A, B represents a polymer block B, and C represents a polymer block C,
the polymer block A is polymerized from alkenyl formic acid monomers,
the polymer block B is polymerized from aryl vinyl monomers, and
the polymer block C is polymerized from acrylate monomers.

2. The block polymer according to claim 1, **characterized in that**, a structure of each alkenyl formic acid monomer is 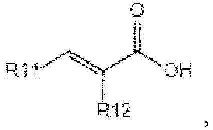 where R¹¹ and R¹² are independently hydrogen or C₁₋₄ alkyl; and/or
a structure of each aryl vinyl monomer is 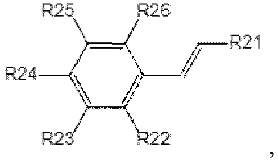 where R²¹, R²², R²³, R²⁴, R²⁵, and R²⁶ are independently hydrogen or C₁₋₄ alkyl; and/or
a structure of each acrylate monomer is 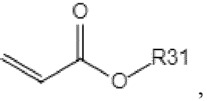 where R³¹ is a linear or branched C₁₋₁₀ alkyl group.

3. The block polymer according to claim 2, **characterized in that**, the alkenyl formic acid monomer is acrylic acid; and/or
the aryl vinyl monomer is styrene; and/or
the structure of the acrylate monomer is 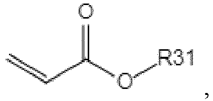 where R³¹ is a linear or branched C₄₋₈ alkyl group.

4. The block polymer according to any one of claims 1 to 3, **characterized in that**, in the block polymer, a degree of the polymerization of the polymer block A is 10 to 50,
a degree of the polymerization of the polymer block B is 200 to 500, and
a degree of the polymerization of the polymer block C is 400 to 1000.

5. A preparation method of a block polymer, **characterized in that**, the preparation method comprises: (1) polymerizing a polymer block A and a polymer block B in presence of a RAFT reagent and an initiator to obtain a polymer block B-A; (2) polymerizing a polymer block C and the polymer block B-A in the presence of the RAFT reagent and the initiator to obtain a polymer block C-B-A; and (3) polymerizing the polymer block B and the polymer block C-B-A in the presence of the RAFT reagent and the initiator to obtain the block polymer.

6. A lithiated block polymer, **characterized in that**, the lithiated block polymer is a lithiated product of the block polymer according to any one of claims 1 to 4.

7. The lithiated block polymer according to claim 6, **characterized in that**, the lithiated block polymer has a structure represented by general formula (I), 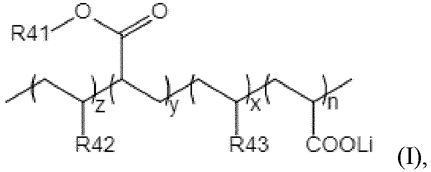 where n is 10 to 50; x is 200 to 500; y is 400 to 1000; z is 200 to 500; R⁴¹ is C₄₋₈ alkyl; and R⁴² and R⁴³ are phenyl or C₁₋₄ alkyl substituted phenyl.

8. The lithiated block polymer according to claim 6, **characterized in that**, the lithiated block is 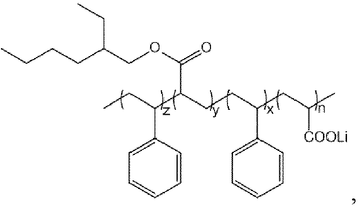 where n is 10 to 50, x is 200 to 500, y is 400 to 1000, and z is 200-500.

9. A preparation method of a lithiated block polymer, **characterized in that**, the preparation method comprises:
step (1) performing a polymerization reaction of polyacrylic acid-polystyrene-poly(2-ethylhexyl acrylate) (PAA-PSt-PEHA) and styrene monomers and obtaining polyacrylic acid-polystyrene-poly(2-ethylhexyl acrylate)-polystyrene (PAA-PSt-PEHA-PSt); and
step (2) treating the polyacrylic acid-polystyrene-poly(2-ethylhexyl acrylate)-polystyrene (PAA-PSt-PEHA-PSt) with lithium hydroxide and obtaining the lithiated block polymer, 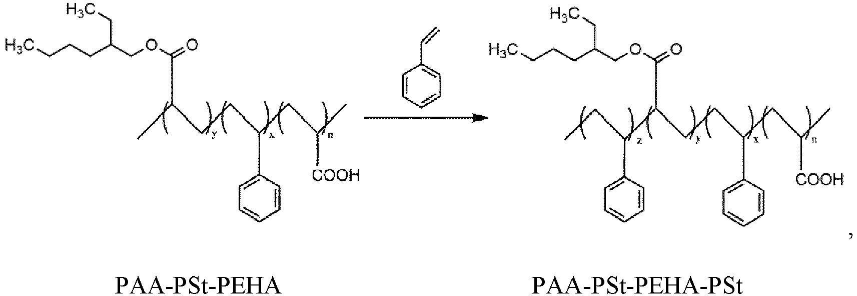 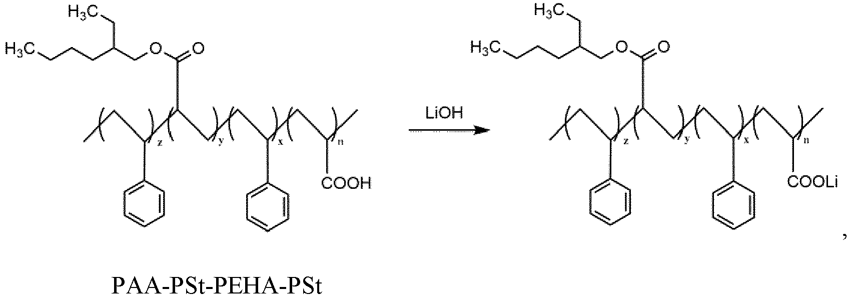
wherein in both step (1) and step (2), n is 10 to 50, x is 200 to 500, and y is 400 to 1000, and in step (2), z is 200 to 500.

10. The preparation method according to claim 9, **characterized in that**, a mass ratio of the polyacrylic acid-polystyrene-poly(2-ethylhexyl acrylate)-polystyrene (PAA-PSt-PEHA-PSt) to the styrene monomers is (0.01 to 0.3): 1; and/or
in step (1), the polymerization reaction is carried out in presence of an initiator; and/or
in step (1), a temperature of the polymerization reaction is 50°C to 90°C; and/or
in step (1), a time of the polymerization reaction is 2 hours to 8 hours; and/or
in step (1), after the polymerization reaction, a polymerization reaction product is washed with deionized water until pH of the polymerization reaction product is 3 to 6; and/or
in step (2), the lithium hydroxide is an aqueous solution of lithium hydroxide, and a mass fraction of the lithium hydroxide in the lithium hydroxide aqueous solution is 5% to 15%.

11. The preparation method according to claim 9, **characterized in that**, a preparation method of the polyacrylic acid-polystyrene-poly(2-ethylhexyl acrylate) (PAA-PSt-PEHA) comprises:
step (A) performing a polymerization reaction of polyacrylic acid-polystyrene (PAA-PSt) and 2-ethylhexyl acrylate monomers and obtaining the polyacrylic acid-polystyrene-poly(2-ethylhexyl acrylate) (PAA-PSt-PEHA), 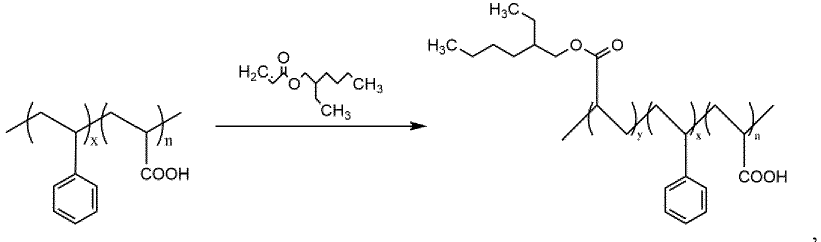
where in step (A), n is 10 to 50 and x is 200 to 500.

12. The preparation method according to claim 11, **characterized in that**, in step (A), a mass ratio of the polyacrylic acid-polystyrene (PAA-PSt) to the 2-ethylhexyl acrylate is (0.6 to 0.9): 1; and/or
in step (A), the polymerization reaction is carried out in the presence of the initiator; and/or
in step (A), a temperature of the polymerization reaction is 50°C to 90°C; and/or
in step (A), a time of the polymerization reaction is 2 hours to 8 hours.

13. The preparation method according to claim 11, **characterized in that**, a preparation of the polyacrylic acid-polystyrene (PAA-PSt) comprises:
step (I) performing a polymerization reaction of polyacrylic acid and styrene monomers and obtaining the polyacrylic acid-polystyrene (PAA-PSt), 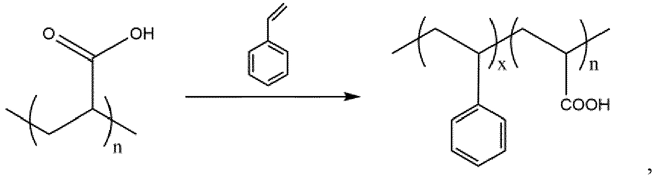
where n is 10 to 50 and x is 200 to 500.

14. The preparation method according to claim 13, **characterized in that**, in step (I), a mass ratio of the polyacrylic acid and the styrene monomers is 1: (3 to 90); and/or
in step (I), the polymerization reaction is carried out in the presence of the initiator; and/or
in step (I), a temperature of the polymerization reaction is 50°C to 90°C; and/or
in step (I), a time of the polymerization reaction is 2 hours to 10 hours.

15. The preparation method according to claim 13, **characterized in that**, a preparation method of the polyacrylic acid is that performing a polymerization reaction of acrylic acid monomers to obtain the polyacrylic acid in the presence of the RAFT reagent and the initiator.

16. The preparation method according to claim 15, **characterized in that**, in the polymerization reaction, a mass ratio of the RAFT reagent, the initiator and the acrylic acid monomer is (0.5-1.0): (0.2-0.5): (10-20); and/or
a temperature of the polymerization reaction is 50°C to 90°C; and/or
a time of the polymerization reaction is 10 hours to 22 hours; and/or
the initiator is potassium persulfate, sodium persulfate, or ammonium persulfate; and/or
the RAFT agent preferably is 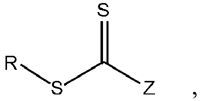 where R is an isopropionic group, acetoxy group, 2-cyanoacetoxy, or 2-aminoacetoxy, and Z is C₄₋₁₂ alkyl, C₄₋₁₂ alkylthio, phenyl, or benzyl.

17. An application of a block polymer as a binder for a lithium-ion battery.

18. An application of a lithiated block polymer as a binder for a lithium ion battery.
